# EUROPEAN PATENT APPLICATION

(11) **EP 2 983 386 A1**
(43) Date of publication of application: **10.02.2016**
(21) Application number: 14306254.5
(22) Date of filing: 07.08.2014
(51) Int. Cl.: H04W 8/00, H04W 72/04

(54) **Wireless communication network control node and method**

(71) Applicant: ALCATEL LUCENT, 92100 Boulogne-Billancourt (FR)
(72) Inventor: Palat, Sudeep, Swindon, Wiltshire SN5 7DJ (GB); Lim, Seau Sian, Swindon, Wiltshire SN5 7DJ (GB)
(74) Representative: Coghlan, Judith Elizabeth Kensy

(57) **Abstract**

Aspects and embodiments relate to a wireless communication network control node method, a wireless communication network control node and computer program product operable to perform that method. The wireless communication network control node method comprises: receiving an indication that a user equipment operating within the network intends to make a direct transmission to at least one other user equipment in the network; determining resource to be allocated to the user equipment for the direct transmission; and transmitting an indication of the resource to be allocated to the at least one other user equipment in the network. It will be appreciated that aspects and embodiments may provide a method to optimize user equipment power consumption when operating in a device-to-device communication mode. The methods described may provide a means to improve device power consumption, whether that device is operating in single or multiple D2D spectrum regions.

## Description

### FIELD OF THE INVENTION

The invention relates to a wireless communication network control node method, a wireless communication network control node and computer program product operable to perform that method.

### BACKGROUND

Wireless telecommunication systems are known. In such systems network connectable devices or mobile communication devices such as user equipment, mobile telephones and similar are typically operable to communicate with base stations provided by network providers.

In known wireless telecommunication systems, radio coverage is provided to network connectable devices within areas known as cells. Abase station is located in each cell to provide radio coverage. Typically, network connectable devices in each cell are operable to receive information and data from a base station and to transmit information and data to a base station. Network connectable devices roam through a wireless communication system. A number of base stations are provided and are distributed geographically in order to provide a wide area of coverage to network connectable devices.

When user equipment is within an area served by a base station, communications may be established between the user equipment and the base station over associated radio links. Each base station typically supports a number of sectors within a geographical area of service. Typically, a different antenna within a base station supports each associated sector and each base station often has multiple antennas.

It has been recognised that it is possible to provide device-to-device communication. That is to say, it may be possible for network connectable devices to transmit and receive directly to each other without the need for a base station.

For device-to-device communication using wireless communication signals the channel (comprising time - frequency resource over which a signal is to be transmitted) should, where possible, be allocated to a device transmitting the signal to avoid signal collision. Device-to-device communications may be subject to various unexpected consequences. It is desired to address some of those consequences.

### SUMMARY

A first aspect provides a wireless communication network control node method comprising: receiving an indication that a user equipment operating within the network intends to make a direct transmission to at least one other user equipment in the network; determining resource to be allocated to the user equipment for the direct transmission; and transmitting an indication of the resource to be allocated to the at least one other user equipment in the network.

The first aspect recognises that device-to-device networks may be subject to various issues. Device-to-device (D2D) communication may require methods to be employed within a network to discover D2D candidates and to establish D2D communications. Device-to-device communications may be particularly applicable to public safety and non-public safety scenarios.

### Device-to-Device Communication Transmission Methods

The first aspect recognises that two types of resource allocation schemes may be used in support of device-to-device communication regimes. One resource allocation scheme is known as a Mode 1 resource allocation scheme. Typically, Mode 1 is used when a transmitting network connectable device (for example, user equipment) is in a region of radio coverage supported by a base station. That mode of resource allocation requires a transmitting device to request radio resource from a network, or controlling network node, for each transmission or series of transmissions it intends to make.

Mode 2 resource allocation schemes are typically used when a transmitting user equipment is either within a coverage region supported by a base station, or completely outside network coverage supported by radio base stations. Mode 2 operates such that a transmitting user equipment is operable to autonomously select resource from a pool of radio resource in relation to each transmission it makes. The pool of radio resource may be preconfigured or provided by a network. The second mode of operation is more "contentious" since it will be understood that one device may potentially be operable to select the same radio resource for transmission at the same time as another device.

### Device-to-device Communication Reception

Regardless of the allocation scheme implemented within a network, a device partaking in device-to-device communication techniques must be operable to receive transmissions made by other devices in a D2D arrangement. As a result, user equipment or a D2D capable device is typically operable to monitor for any and all possible D2D transmissions. User equipment operating in D2D is typically provided with a pool of radio resources across which to listen. That pool is either preconfigured (to be used when the user equipment is out of a base station coverage region) or can be provided by a network (for example, when a device is within a coverage region or within a partial coverage region). If idle mode user equipment are supported within a D2D network, the pool of possible resource across which to listen is typically provided in SIB/L3/RRC broadcast signalling. If a receiving device is required to be in connected mode for D2D reception, the pool of radio resources across which the device must listen is typically provided by L3/ RRC dedicated signalling.

The first aspect recognises that those user equipment operable to receive signals must continuously monitor the entire reception pool for any data in relation to groups in which it is interested. The first aspect recognises that continuous monitoring can consume a lot of radio resource and significant battery resource. The first aspect recognises that battery savings can be made if such devices can avoid a scenario in which they need to continuously listen for any D2D data on multiple D2D spectrums. The first aspect recognises that D2D reception techniques can be optimized to improve power consumption whilst the user equipment is within cellular coverage.

The first aspect recognises that in a D2D network, operation maybe such that a receiving device may need to continuously monitor scheduling assignment resources of a D2D spectrum for D2D transmissions. Aspects may further recognise that the resource pool of the scheduling assignment is often discontinuous which can allow the user equipment to consume less power since it need not continuously monitor across all time resource.

In the case of multiple D2D spectrums, a receiving user device may need to monitor the scheduling assignment resources of multiple D2D spectrums which maybe particularly detrimental to overall device power consumption.

A first aspect provides a wireless communication network control node method. That method may be performed by an umbrella base station, providing radio coverage in the region where a D2D sub-network is operating. The method may, for example, be performed by a suitable radio base station within a network. Other embodiments may provide that the method is performed by a network head device within a plurality of devices within an active D2D network.

The method may comprise: receiving an indication that a user equipment operating within the network intends to make a direct transmission to at least one other user equipment in the network. Accordingly, the method may be applied when a device to device network is active within a region of a network. If no D2D network is in operation there maybe no requirement for a method according to aspects and embodiments described herein. Furthermore, if no D2D network is active, then it may be possible to ensure that possible receiving devices are operable to prevent constant monitoring for transmissions on D2D resource. That is to say, unless there is a specific indication of resource to be used by a transmitting device, those potentially receiving devices may save battery by preventing constant monitoring of all possible communication resource.

The method may comprise: determining resource to be allocated to the user equipment for the direct transmission. That determination may comprise assessing whether a subset of resource has been assigned by a network for D2D communication. The determination may comprise specific active allocation of resource to a user equipment participating in direct transmissions to other user equipment.

The method may comprise: transmitting an indication of the resource to be allocated to the at least one other user equipment in the network. Accordingly, the other user equipment may operate such that they only monitor resource on which a transmitting device is likely to make transmissions, thus allowing for more efficient receiving device operation.

In one embodiment, receiving an indication that a user equipment operating within the network intends to make a direct transmission to at least one other user equipment in the network comprises: receiving an indication of interest in making a device to device transmission from the user equipment. Accordingly, before explicitly requesting resource, user equipment may indicate, via messaging to a control node, that it is shortly to explicitly request resource. That pre-request messaging may be used as a trigger to initiate the method of the first aspect.

In one embodiment, receiving an indication that a user equipment operating within the network intends to make a direct transmission to at least one other user equipment in the network comprises: receiving a request for device to device resource from the user equipment. Accordingly, if a device explicitly requests an allocation of resource to make a device to device transmission, the control method of the first aspect may be initiated.

In one embodiment, receiving an indication that a user equipment operating within the network intends to make a direct transmission to at least one other user equipment in the network comprises: receiving an indication of an active device to device user equipment group within the network. Accordingly, the control method may be initiated at, for example, a base station, if it is determined that there is an inactive or active device to device user group, for example, within a region of radio coverage supported by a base station. Similarly, if a device in a device to device group indicates to a base station or other network control node that it wishes, or is likely to wish, to make a device to device transmission, the control method of the first aspect may be initiated.

In one embodiment, transmitting an indication of the resource to be allocated to the at least one other user equipment in the network comprises: a broadcast message. Accordingly, all user equipment in a network may be operable to determine which resource may be monitored for D2D transmissions. In one embodiment, the broadcast message comprises: a System Information Broadcast (SIB) message. Accordingly, all user equipment in a network maybe operable to determine which resource maybe monitored for D2D transmissions.

In one embodiment, transmitting an indication of the resource to be allocated to the at least one other user equipment in the network comprises: a paging message or PDCCH message. Use of a paging-type messaging scheme can allow broadcast messages to be transmitted, via broadcast-type signals, to a chosen plurality of user equipment operating within a message. In one embodiment, the paging message is sent to a plurality of the other user equipment, that plurality of other user equipment being identifiable by a single paging group identifier associated with a device to device communication group. In one embodiment, the paging message is sent to a plurality of the other user equipment, that plurality of other user equipment being identifiable by a plurality of paging identifiers each associated with a device to device communication group. In some embodiments, the indication may be transmitted using a PDCCH message. That PDCCH message may comprise: a PDCCH with a common RNTI, that common RNTI may comprise a D2D RNTI or a D2D group-specific RNTI.

In one embodiment, transmitting an indication of the resource to be allocated to the at least one other user equipment in the network comprises: layer 2 signalling to the other user equipment, that layer 2 signalling comprising: a MAC control element or MAC PDU. Accordingly, user equipment may be informed by appropriate efficient messaging.

In one embodiment, transmitting an indication of the resource to be allocated to the at least one other user equipment in the network comprises: including the indication in a handover message to user equipment on entry to the network. Accordingly, when user equipment moves into a coverage region in which a D2D group is active, the method of the first aspect maybe used to inform such a device of the resource to monitor for D2D transmissions.

In one embodiment, transmitting an indication of the resource to be allocated to the at least one other user equipment in the network comprises: transmitting an indication of resource comprising: one or more of: an indication of device to device spectrum to monitor for transmission; a device to device frequency, an indication of device to device resource within a spectrum to monitor for transmission; or a device to device group identifier.

In one embodiment, the method comprises: determining a discontinuous reception regime employed by the at least one other user equipment in the network and transmitting said indication within a discontinuous reception period. Accordingly, the indication may be transmitted in the next available discontinuous reception waking occasion. That discontinuous reception regime may be a dedicated device to device waking occasion. If operating in a discontinuous reception regime, user equipment maybe operable, such that after receipt of the transmitted indication, the user may wake up to monitor for D2D transmissions on resource as indicated.

In one embodiment, the transmitted indication may comprise a common indication for both the user equipment and the other user equipment. Accordingly, the same indication can be used to transmitting and receiving D2D user equipment. That is to say, the message allocating resource to the transmitting user equipment and the message telling other user equipment which resource to monitor for transmissions may comprise the same message, understandable by both types of user equipment.

A second aspect provides a computer program product operable, when executed on a computer, to perform the method of the first aspect.

A third aspect provides a wireless communication network control node comprising: reception logic operable to receive an indication that a user equipment operating within the network intends to make a direct transmission to at least one other user equipment in the network; determination logic operable to determine resource to be allocated to the user equipment for the direct transmission; and transmission logic operable to transmit an indication of the resource to be allocated to the at least one other user equipment in the network.

In one embodiment, the reception logic is operable to receive an indication of interest in making a device to device transmission from the user equipment.

In one embodiment, the reception logic is operable to receive a request for device to device resource from the user equipment.

In one embodiment, the reception logic is operable to receive an indication of an active device to device user equipment group within the network.

In one embodiment, the transmission logic operable to transmit an indication of the resource to be allocated to the at least one other user equipment in the network is operable to transmit a broadcast message.

In one embodiment, the broadcast message comprises: a System Information Broadcast (SIB) message.

In one embodiment, the transmission logic operable to transmit an indication of the resource to be allocated to the at least one other user equipment in the network is operable to transmit a paging message.

In one embodiment, the paging message is sent to a plurality of the other user equipment, that plurality of other user equipment being identifiable by a single paging group identifier associated with a device to device communication group.

In one embodiment, the paging message is sent to a plurality of the other user equipment, that plurality of other user equipment being identifiable by a plurality of paging identifiers each associated with a device to device communication group.

In one embodiment, the transmission logic operable to transmit an indication of the resource to be allocated to the at least one other user equipment in the network is operable to transmit layer 2 signalling to the other user equipment, that layer 2 signalling comprising: a MAC control element or MAC PDU.

In one embodiment, the transmission logic operable to transmit an indication of the resource to be allocated to the at least one other user equipment in the network is operable to include the indication in a handover message to user equipment on entry to the network.

In one embodiment, the transmission logic operable to transmit an indication of the resource to be allocated to the at least one other user equipment in the network is operable to transmit an indication of resource, that indication comprising: one or more of: an indication of device to device spectrum to monitor for transmission; an indication of device to device resource within a spectrum to monitor for transmission; or a device to device group identifier.

A fourth aspect provides a wireless communication network user equipment method comprising: configuring user equipment for operation to transmit or receive directly to other user equipment within said network; and monitoring for receipt of an indication of resource to be allocated to a transmitting user equipment for direct communication with at least one other user equipment in the network.

A fifth aspect provides a computer program product operable, when executed on a computer, to perform the method of the fourth aspect.

A sixth aspect provides a wireless communication network user equipment comprising: configuration logic operable to configure user equipment for operation to transmit or receive directly to other user equipment within said network; and monitoring logic operable to monitor for receipt of an indication of resource to be allocated to a transmitting user equipment for direct communication with at least one other user equipment in the network.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:

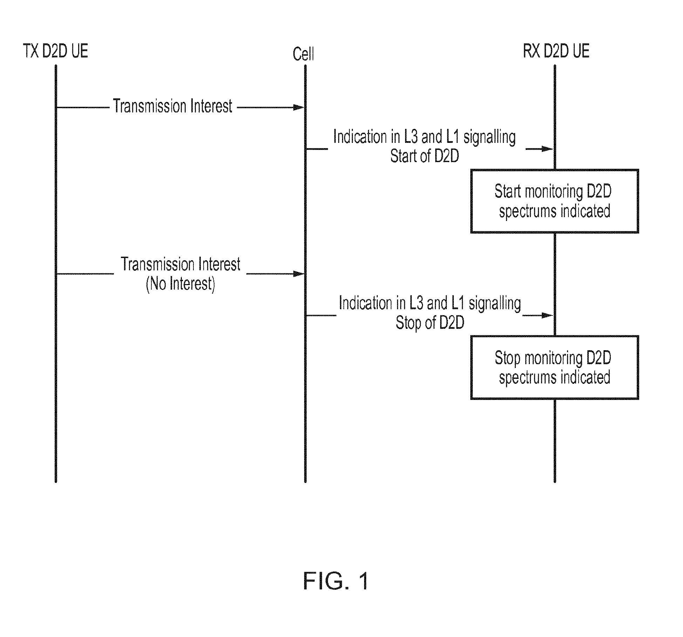

Figure 1 illustrates schematically an example signalling flow according to one arrangement.

### DESCRIPTION OF THE EMBODIMENTS

Before discussing the embodiments in any more detail, first an overview will be provided.

Aspects, embodiments and arrangements described herein are such that a network is operable to provide information to receiving user equipment which provides an indication of whether there is any direct D2D transmissions intended for a given device. In some embodiments information is provided to receiving devices regarding whether there are any direct 1 to M group transmissions being made in D2D spectrums. In some arrangements that information is provided to receiving devices via RRC or L3 broadcast signalling, or via layer 1 or layer 2 broadcast signalling. If such indications are received by a receiving device then that receiving device will monitor the scheduling assignment resources of a D2D spectrum. As a result, it may be possible to reduce user equipment power consumption. The particular signalling methods used to provide receiving devices with such an indication are described in more detail below. It will be appreciated that, regardless of the particular signalling method used, indications transmitted to receiving devices can be repeated, for example, periodically, thereby allowing new user equipment moving into a cell or joining a group D2D transmission group to receive a service.

Embodiments recognise that if a device-to-device network is operating in Mode 1 transmission, a transmitting device is in an RRC connected state in order to request D2D resources for D2D transmissions. In some instances, prior to any particular request for D2D resources, a transmitting user equipment may be operable to provide an indication of its interest in D2D transmissions to a network. Embodiments recognise that the indication of interest or particular request for D2D resources can be used as a trigger to signal to potentially receiving user equipment to start monitoring corresponding D2D spectrum.

It will further be appreciated that for such a scheme to work in Mode 2 transmission arrangements a Mode 2 transmitting device will typically need to be within the coverage region of a base station and enter an RRC connected state to inform a network regarding its intended Mode 2 transmission. That step of informing may occur when a device is allocated a Mode 2 transmission resource pool over dedicated signalling, rather than receiving such a resource pool via a system information broadcast message (SIB). It will be appreciated that receipt of information from the Mode 2 transmitting device regarding its D2D transmission maybe used as a trigger to inform receiving devices of a corresponding D2D spectrum.

Embodiments recognise that a receiving device, entering a cell in an idle mode, may be operable to receive appropriate indications regarding which portion of D2D signalling spectrum to monitor in, for example, a system information broadcast message transmitted by the base station within a cell.

Embodiments recognise that for a receiving device entering a cell in a connected mode, embodiments may provide that indications regarding where to look for communications in the D2D spectrum maybe included within a handover command from the target cell or may be included in a system information broadcast message received by that device after a successful handover.

According to some embodiments, receiving D2D devices already operating within the coverage of a cell, whether in connected or idle mode, there may be provided a means to receive one or more indications regarding resource to monitor for D2D communications in layer 1 signalling; for example, mapping included within the (e)PDCCH.

According to some embodiments, appropriate layer 1 signalling maybe similar to layer 1 signalling used for paging where a common RNTI (for example, a paging-RNTI) can be used to communicate with appropriate D2D devices. In particular, some embodiments provide that a common RNTI such as a D2D RX-RNTI may be used to communicate such an indication to user equipment. That is to say, in some embodiments a group RNTI is provided to be used for transmission of appropriate indications. In some embodiments, a group of individual RNTI may be used to signal to an appropriate D2D device group. In either case, upon reception of an appropriate indication, each device may be operable to begin monitoring the D2D spectrum in an appropriate manner. It will be appreciated that idle mode user equipment or devices may be operable to monitor only during paging discontinuous reception or a newly defined discontinuous reception instance.

According to some embodiments, multiple common RNTIs, such as a D2D group-specific RNTI, maybe used for indication of a D2D spectrum or group or a set of D2D spectrums or groups. Appropriate mapping may be provided in, for example, some L3 signalling (SIB or dedicated downlink signalling).

According to some embodiments, layer 2 signalling can be sent; for example, a MAC control element or MAC PDU. That layer 2 signalling may contain appropriate indications for receiving devices to determine which part of the D2D spectrum resource is to be monitored.

According to some embodiments, each D2D transmitting user equipment or each D2D group using Mode 1 transmissions can be assigned a D2D RNTI within a D2D RNTI pool. That D2D RNTI may be used for allocating a transmission D2D resource; for example, a transmission D2D SA resource. An appropriate RNTI pool can be provided in broadcast signalling, for example, a SIB, or via dedicated signalling. According to such embodiments, a receiving device may only start monitoring a D2D received resource of a serving frequency if it detects a D2D RNTI provided in a D2D RNTI pool.

Aspects and embodiments further recognise that it is possible to provide a method to prevent or stop monitoring of a D2D frequency or group and that similar types of indications can be used with the D2D frequency or group removed.

To support inter-cell D2D communication for cells within an eNB, a cell may operate such that it provides the indication provided to D2D receive devices to other cells within the eNB. In the case of inter-eNB arrangements, X2 signalling between two eNBs can be used to exchange appropriate information.

It will be appreciated that according to some embodiments an indication provided in, for example, RRC or L3 broadcast signalling (for example, SIB messages), L3/RRC dedicated signalling (for example, RRC connection reconfiguration messages), and L1/L2 signalling may comprise one or more of: D2D spectrum to monitor, D2D resources of various D2D spectrums to monitor, a group identifier or a combination of those parameters.

Figure 1 illustrates schematically a method according to one arrangement. In particular, Figure 1 illustrates an example messaging flow used in support of some embodiments. A method may be provided in which a Mode 1 transmitting device may indicate interest in making a D2D transmission. A cell may be operable to send an indication to receiving D2D devices in the system information broadcast message or to send L1/L2 signalling in all paging occasions or D2D occasions (in the case of a DRX arrangement) to alert both idle mode and connected mode devices of reception of an indication of where to look within available D2D resources for any messaging. Those devices configured to receive D2D messaging from the transmitting device may then operate to monitor the D2D spectrum in regions where the transmitting use device has indicated interest in making transmissions.

A D2D network communication regime maybe deactivated if, for example, a Mode 1 transmit device indicates no interest in making transmission. As a result, a cell may be operable to send no indication in a broadcast message (for example, a SIB) or within dedicated layer 1/layer 2 messaging, and/or alerts all receiving devices of the need to stop monitoring on some or all D2D spectrum. Consequently, receiving devices are operable to stop monitoring on some or all D2D spectrum.

It will be appreciated that aspects and embodiments may provide a method to optimize user equipment power consumption when operating in a device-to-device communication mode. The methods described may provide a means to improve device power consumption, whether that device is operating in single or multiple D2D spectrum regions.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A wireless communication network control node method comprising:
receiving an indication that a user equipment operating within said network intends to make a direct transmission to at least one other user equipment in said network;
determining resource to be allocated to said user equipment for said direct transmission; and
transmitting an indication of said resource to be allocated to said at least one other user equipment in said network.

2. A method according to claim 1, wherein receiving an indication that a user equipment operating within said network intends to make a direct transmission to at least one other user equipment in said network comprises:
receiving an indication of interest in making a device to device transmission from said user equipment.

3. A method according to claim 1, wherein receiving an indication that a user equipment operating within said network intends to make a direct transmission to at least one other user equipment in said network comprises:
receiving a request for device to device resource from said user equipment.

4. A method according to any preceding claim, wherein transmitting an indication of said resource to be allocated to said at least one other user equipment in said network comprises: a broadcast message.

5. A method according to any preceding claim, wherein transmitting an indication of said resource to be allocated to said at least one other user equipment in said network comprises: a paging message.

6. A method according to claim 5, wherein said paging message is sent to a plurality of said other user equipment, that plurality of said other user equipment being identifiable by a single paging group identifier associated with a device to device communication group.

7. A method according to claim 6, wherein said paging message is sent to a plurality of said other user equipment, that plurality of said other user equipment being identifiable by a plurality of paging identifiers each associated with a device to device communication group.

8. A method according to any one of claims 1 to 4, wherein transmitting an indication of said resource to be allocated to said at least one other user equipment in said network comprises: layer 2 signalling to said other user equipment, said layer 2 signalling comprising: a MAC control element or MAC PDU.

9. A method according to any one of claims 1 to 4, wherein transmitting an indication of said resource to be allocated to said at least one other user equipment in said network comprises: including said indication in a handover message to user equipment on entry to said network.

10. A method according to any preceding claim, wherein transmitting an indication of said resource to be allocated to said at least one other user equipment in said network comprises: transmitting an indication of resource comprising: one or more of:
an indication of device to device spectrum to monitor for transmission; an indication of device to device resource within a spectrum to monitor for transmission; or a device to device group identifier.

11. A method according to any preceding claim, wherein the method comprises:
determining a discontinuous reception regime employed by said at least one other user equipment in the network and transmitting said indication within a discontinuous reception period.

12. A wireless communication network control node comprising:
reception logic operable to receive an indication that a user equipment operating within said network intends to make a direct transmission to at least one other user equipment in said network;
determination logic operable to determine resource to be allocated to said user equipment for said direct transmission; and
transmission logic operable to transmit an indication of said resource to be allocated to said at least one other user equipment in said network.

13. A wireless communication network user equipment method comprising:
configuring user equipment for operation to transmit or receive directly to other user equipment within said network; and monitoring for receipt of an indication of resource to be allocated to a transmitting user equipment for direct communication with at least one other user equipment in the network.

14. A wireless communication network user equipment comprising: configuration logic operable to configure user equipment for operation to transmit or receive directly to other user equipment within said network; and monitoring logic operable to monitor for receipt of an indication of resource to be allocated to a transmitting user equipment for direct communication with at least one other user equipment in the network.

15. A computer program product operable, when executed on a computer, to perform the method of any one of claims 1 to 11 or claim 13.
